# EUROPÄISCHE PATENTSCHRIFT

(11) **EP 0 561 325 B1**
(45) Veröffentlichungstag und Bekanntmachung des Hinweises auf die Patenterteilung: **03.09.1997**
(21) Anmeldenummer: 93104179.2
(22) Anmeldetag: 15.03.1993
(51) Int. Cl.: G07C 7/00

(54) **Im Zeitlaufwerk eines Fahrtschreibers vorgesehene Rutschkupplung**
Slip clutch for a time drive mechanism
Embrayage à surcharge pour une platine de tachygraphe

(30) Priorität: 20.03.1992 DE 9203742 U
(43) Veröffentlichungstag der Anmeldung: 22.09.1993
(73) Patentinhaber: VDO Adolf Schindling AG, 60326 Frankfurt/Main (DE)
(72) Erfinder: Knauer, Norbert, Dipl.-Ing. (FH), W-7218 Trossingen (DE)

(56) Entgegenhaltungen:
- EP-A- 0 126 374
- EP-A- 0 306 908
- EP-A- 0 368 219
- DE-A- 3 244 436

## Beschreibung

Die Erfindung betrifft eine im Zeitlaufwerk eines Fahrtschreibers vorgesehene Rutschkupplung, welche ein Richten sowohl der Mitnahmemittel für die als Aufzeichnungsträger dienenden Diagrammscheiben, als auch der Zeiger zum Anzeigen der Uhrzeit gestattet und welche zwischen einer Übertragungswelle und einem auf dieser angeordneten treibenden Zahnrad des Zeitlaufwerks ausgebildet ist. Eine Vorrichtung dieser Art ist aus EP-A-0 368 219 bekannt.

Bekanntlich erfolgen die Aufzeichnungen in Fahrtschreibern derart, daß sie der aktuellen Uhrzeit zugeordnet werden können. Dementsprechend müssen die Diagrammscheibenmitnahmemittel einerseits auf die aktuelle Uhrzeit richtbar, andererseits für eine nur eine ganz bestimmte Stellung einer Diagrammscheibe in bezug auf die Registrierorgane gestattende, uhrzeitrichtige Aufnahme auf den Diagrammscheibenmitnahmemitteln ausgebildet sein.

Ein Richten der Diagrammscheibenmitnahmemittel und gleichzeitig auch der Uhrzeitanzeigemittel ist trotz oder gerade wegen der verwendeten, an sich hochgenauen, quarzgesteuerten Laufwerke in Fahrzeugen deshalb unvermeidlich, weil die betreffenden Laufwerke in einem Milieu mit extrem hohem, die Ganggenauigkeit beeinträchtigenden Störpegel eingesetzt sind. Ferner sind, abgesehen von Spannungsausfällen bei Reparaturarbeiten und einer Sommerzeit-/Winterzeit-Umstellung im Fernverkehr auch Zeitzonenüberschreitungen zu berücksichtigen.

Für die Ausbildung und die Anordnung einer das Richten ermöglichenden Rutschkupplung im Zeitlaufwerk ist selbstverständlich eine Abstimmung vorzunehmen zwischen einer noch zumutbaren Richtkraft bei der von Hand vorzunehmenden Einstellbewegung und einem zuverlässigen Kupplungsmoment für den Antriebskraftfluß. Jedenfalls muß das Kupplungsmoment so groß gewählt werden, daß auch bei einer gewissen Schwergängigkeit infolge zusätzlicher, auf der jeweiligen Diagrammscheibe wirksamer Registrierorgane gegebenenfalls durch zusätzliche Reibung, die aufgrund einer gewölbten Diagrammscheibe entsteht, kein Schlupf auftritt.

Ausgehend von den geschilderten Bedingungen ergibt sich für die konstruktive Ausbildung der Rutschkupplung, daß einerseits die Bedingungen uhrentechnischer Präzision, andererseits die Großserienfertigung, d. h. möglichst grobe Toleranzen, Vermeidung von Kontroll- und Einstellarbeitsgängen und eine weitgehende Verwendung von Spritzgußteilen, zu berücksichtigen sind.

Somit war der Erfindung die Aufgabe gestellt, eine für das Zeitlaufwerk von Fahrtschreibern geeignete Rutschkupplung zu schaffen, die den geschilderten Anforderungen gerecht wird, insbesondere eine für die Großserie geeignete Reproduzierbarkeit bietet.

Die Lösung der gestellten Aufgabe sieht vor, daß mit der Übertragungswelle eine Scheibenfeder und eine Friktionsscheibe verdrehfest verbunden sind und daß das Zahnrad zwischen der Scheibenfeder und der Friktionsscheibe derart angeordnet ist, daß es nach Überwindung eines eingestellten Friktionsmomentes relativ zur Übertragungswelle drehbar ist.

Insbesondere ist vorgesehen, daß der Durchmesser der Federscheibe nur wenig kleiner ist als der Fußkreisdurchmesser des Zahnrades, daß das Zahnrad für eine gegen das Zahnrad gerichtete Durchbiegung der Federscheibe freigespart ist und daß die Friktionsscheibe ringförmig auf der gegenüberliegenden Planfläche des Zahnrades anliegt.

Als Vorteil dieser Lösung sei erwähnt, daß das Reibmoment an einem relativ großen Reibradius gebildet wird und somit der Verschleiß reduziert ist, mit anderen Worten der Reibungskoeffizient klein gehalten werden kann. Ferner sorgt die axial federnde Kupplungsfeder dafür, daß bei den unvermeidlichen Toleranzschwankungen eine weitgehend gleiche, zumindest zufriedenstellende Anpreßkraft gegeben ist. Auch ist die gefundene Bauform ohne weiteres maschinell montierbar, wobei gemäß der im Anspruch 2 beschriebenen Variante auch eine funktionsfertig vormontierte Baugruppe hergestellt und auf einer Übertragungswelle angebracht werden kann.

Im folgenden sei die Erfindung anhand der beigefügten Zeichnungen erläutert.

Es zeigen
Fig. 1 einen Getriebeausschnitt als Übersichtsdarstellung,
Fig. 2 eine Ansicht einer Übertragungswelle des Zeitlaufwerkes mit in einer Montagefolge einander zugeordneten Bauteilen der Rutschkupplung und des die Übertragungswelle treibenden Zahnrades in geschnittener Darstellung,
Fig. 3, 4 und 5 Ausführungs- und Anordnungsvarianten, bei denen jeweils das treibende Zahnrad und die diesem zugeordnete Rutschkupplung als funktionsfähige, im Schnitt dargestellte Baugruppe auf der betreffenden Übertragungswelle montiert sind.

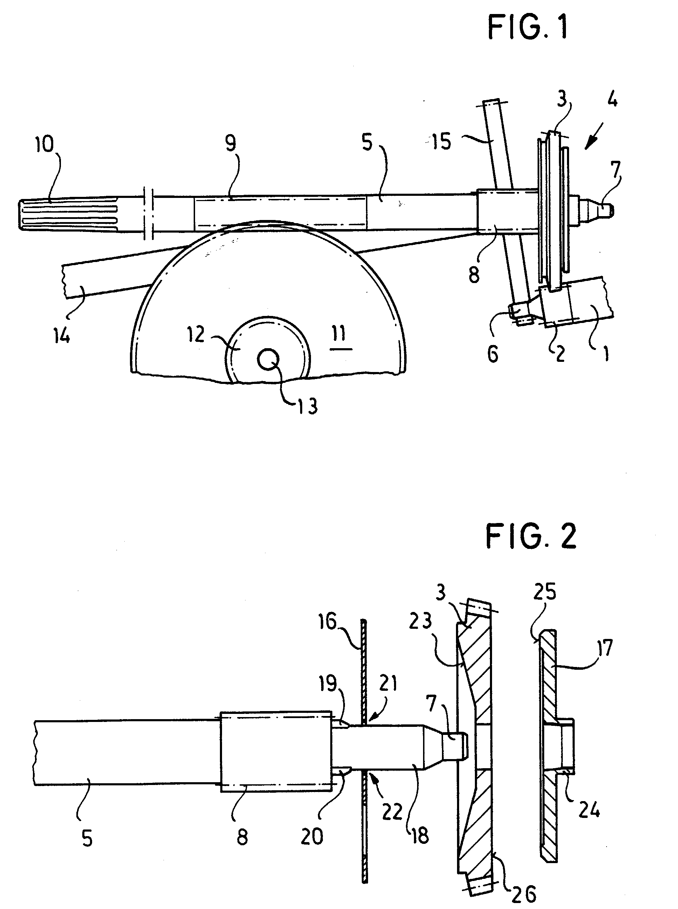

Die in Fig. 1 dargestellten Getriebeelemente bilden in einm Fahrtschreiber einen Getriebeausschnitt zwischen den, weil nicht neuerungswesentlich nicht dargestellten Laufwerksmotor einerseits und den Diagrammscheibenmitnahmemitteln sowie den Zeitanzeigemitteln andererseits. Dabei steht eine getrieblich mit dem Laufwerksmotor verbundene Welle 1 mittels einer an ihr angeformten Verzahnung 2 in Eingriff mit einem Zahnrad 3, welches unter Zwischenschaltung einer Rutschkupplung 4 mit einer Übertragungswelle 5 getrieblich verbunden ist. Zur Klarstellung sind die Lagerzapfen der Welle 1 und der Übertragungswelle 5 mit 6 und mit 7 bezeichnet.

Die Übertragungswelle 5 ist mit einer Verzahnung 8 einer Schnecke 9 und mit einem von außen zugänglichen Griffelement 10 versehen. Das Griffelement 10, mittels dessen ein Richten bzw. Einstellen vorgenommen wird, kann auch an einer getrennten, jedoch mit der Übertragungswelle 5 kuppelbaren Welle ausgebildet sein, wobei, um plumpe Manipulationen zu vermeiden, ein Kuppeln und damit eine Stellbewegung nur dann möglich ist, wenn sich in dem Fahrtschreiber keine Diagrammscheibe befindet. Ein mit der Schnecke 9 in Eingriff stehendes Zahnrad 11 treibt das nicht dargestellte Minutenrohr des Zeitanzeigewerkes an, während das üblicherweise koaxial zum Minutenrohr angeordnete Stundenrohr an einem Zahnrad ausgebildet ist, welches mit einem mit dem Zahnrad 11 umlaufenden Zahnrad 12 kämmt. Mit 13 ist eine dem Zahnradpaar 11, 12 zugeordnete Achse bezeichnet. Wie ferner aus Fig. 1 ersichtlich ist, wird die Übertragungswelle 5 von einer in der Antriebsverbindung der Diagrammscheibenmitnahmemittel liegenden Welle 14 gekreuzt, auf der ein Zahnrad 15 befestigt ist. Dieses steht in Eingriff mit der Verzahnung 8, die in diesem Falle als Schrägverzahnung ausgebildet ist.

Wie die Fig. 2 zeigt, besteht die zwischen dem treibenden Zahnrad 3 und der Übertragungswelle 5 vorgesehene Rutschkupplung 4 aus einer Scheibenfeder 16 und einer Friktionsscheibe 17, die zusammen mit dem Zahnrad 3 auf einem an der Übertragungswelle 5 angeformten Bund 18 angeordnet sind. Dabei erfolgt eine verdrehfeste Verbindung der vorzugsweise speichenradförmig ausgebildeten Scheibenfeder 16 mittels an der Übertragungswelle 5 angeformter Mitnahmenasen 19 und 20, denen in der Scheibenfeder 16 Nute 21 und 22 zugeordnet sind. Das Zahnrad 3, das eine eine axiale Durchbiegung der Federscheibe 16 gestattende Freisparung 23 aufweist, ist auf dem Ansatz 18 mit einer geeigneten, relativ engen Passung drehbar gelagert, und die Friktionsscheibe 17 weist eine ein Aufpressen auf den Ansatz 18 gestattende Nabe 24 auf. Mit dem Aufpressen der Friktionsscheibe 17 wird, wobei die Friktionsscheibe 17 lediglich mit einem Ringansatz 25 auf der Planfläche 26 des Zahnrades 3 aufliegt, die Scheibenfeder 16 bis zum Erreichen der erforderlichen Friktion der Rutschkupplung 4 vorgespannt. Diese Bauform ist nachstellbar.

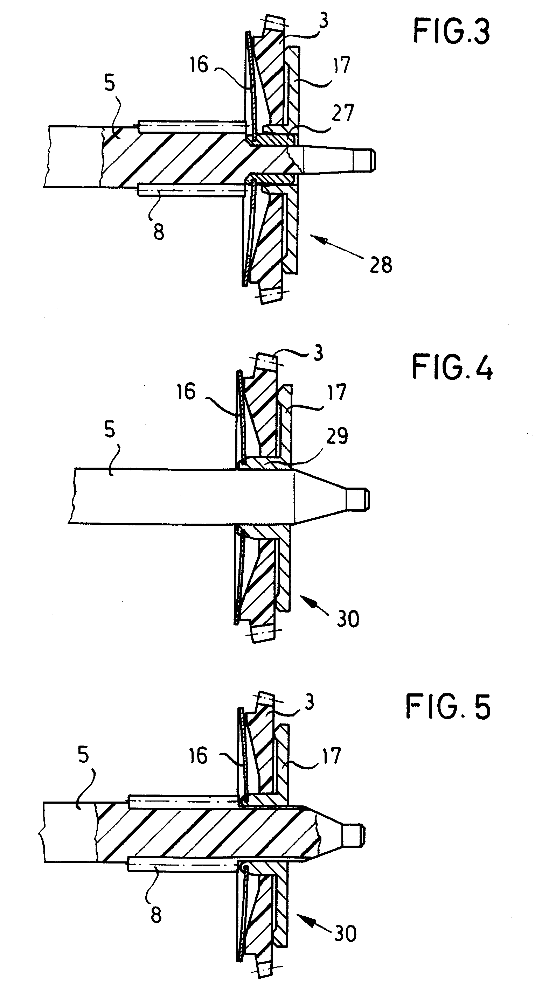

Bei dem Ausführungsbeispiel gemäß der Fig. 3 ist der Federscheibe 16 eine Buchse 27 zugeordnet, die mittels einer Preßpassung auf der Übertragungswelle 5 befestigt werden kann und mit welcher die Federscheibe 16 vernietet ist. In diesem Falle dient die Buchse der Friktionsscheibe 17, deren Nabe gegenüber der Ausführung gemäß Fig. 1 in die entgegengesetzte Richtung angeformt ist, als Sitz. Ferner ist das Zahnrad 3 drehbar auf der Nabe der Friktionsscheibe 17 gelagert. Auch bei diesem Ausführungsbeispiel ist die Friktion nachstellbar, andererseits gestattet diese Lösung sowohl die Einzelmontage an der Übertragungswelle 5 als auch die Vormontage einer funktionsfertigen Baugruppe 28, bestehend aus der Federscheibe 16, der Friktionsscheibe 17 und dem Zahnrad 3.

Das Ausführungsbeispiel Fig. 4 zeigt demgegenüber eine Lösung mit weniger Bauteilen, d. h. die Federscheibe 16 ist unmittelbar an der Nabe 29 der Friktionsscheibe 17 befestigt. Diese Baugruppe 30, die mit der in Fig. 5 dargestellten identisch ist, muß verständlicherweise vormontiert werden und ist nicht nachstellfähig. Sie ist jedoch, was mit der Fig. 4 demonstriert sein soll, unabhängig von einem an der Übertragungswelle 5 ausgebildeten Anschlagbund montierbar. Dies gilt auch für das Ausführungsbeispiel gemäß Fig. 3.

Die Fig. 5 zeigt, daß diese Lösung sich auch eignet, auf einem Abschnitt der Übertragungswelle 5 angebracht zu werden, der nicht als Lauffläche für das Zahnrad 3 geeignet ist, beispielsweise infolge der Verzahnung 8 gekerbt ist, was auf der anderen Seite grobe Toleranzen bezüglich der Preßpassung gestattet. Diese Ausführungsform eignet sich insbesondere für die Verbindung der Friktionsscheibe 17 mit einer metallischen Übertragungswelle, die in dem Milieu, in dem der Fahrtschreiber üblicherweise eingesetzt ist, den zusätzlichen Vorteil der geringen Temperaturdehnung und somit der besseren Friktionskonstanz bietet.

## Patentansprüche

1. Im Zeitlaufwerk eines Fahrtschreibers vorgesehene Rutschkupplung, welche ein Richten sowohl der Mitnahmemittel für die als Aufzeichnungsträger dienenden Diagrammscheiben, als auch der Zeiger zum Anzeigen der Uhrzeit gestattet und welche zwischen einer Übertragungswelle (5) und einem auf dieser angeordneten, treibenden Zahnrad (3), des Zeitlaufwerks ausgebildet ist,
dadurch gekennzeichnet,
daß mit der Übertragungswelle (5) eine Scheibenfeder (16) und eine Friktionsscheibe (17) verdrehfest verbunden sind und
daß das Zahnrad (3) zwischen der Scheibenfeder (16) und der Friktionsscheibe (17) derart angeordnet ist, daß es nach Überwindung eines eingestellten Friktionsmomentes relativ zur Übertragungswelle (5) drehbar ist.

2. Rutschkupplung nach Anspruch 1,
dadurch gekennzeichnet,
daß an der Friktionsscheibe (17) eine Nabe (29) angeformt ist,
daß die Nabe (29) dem Zahnrad (3) als Lager dient,
daß die Scheibenfeder (16) mit der Nabe (29) vernietet ist und
daß zwischen der Nabe (29) und der Übertragungswelle (5) eine Preßpassung vorgesehen ist.

3. Rutschkupplung nach Anspruch 1,
dadurch gekennzeichnet,
daß an der Übertragungswelle (5) ein Ansatz (18) und wenigstens eine Mitnahmenase (20) ausgebildet sind,
daß in der Federscheibe (16) eine dem Ansatz (18) und der Mitnahmenase (20) entsprechende Öffnung vorgesehen ist und
daß der Ansatz (18) als Lagerzapfen für das Zahnrad (3) und als Träger für die Friktionsscheibe (17) dient.

4. Rutschkupplung nach Anspruch 1,
dadurch gekennzeichnet,
daß der Durchmesser der Federscheibe (16) nur wenig kleiner ist als der Fußkreisdurchmesser des Zahnrades (3),
daß das Zahnrad (3) für eine gegen das Zahnrad (3) gerichtete Durchbiegung der Federscheibe (16) freigespart ist und
daß die Friktionsscheibe (17) ringförmig (25) auf der gegenüberliegenden Planfläche (26) des Zahnrades (3) anliegt.

## Claims

1. Slip clutch which is provided in the time drive mechanism of a tachograph, permits a setting both of the entraining means for the charts serving as recording medium and of the hands for indicating the time, and is constructed between a transmission shaft (5) and a driving gear-wheel (3), arranged on the latter, of the time drive mechanism, characterised in that a disc spring (16) and a friction disc (17) are connected, in such a way as to be fixed in terms of rotation, to the transmission shaft (5), and in that the gear wheel (3) is arranged between the disc spring (16) and the friction disc (17) in such a way that it is rotatable relative to the transmission shaft (5) after overcoming a set friction torque.

2. Slip clutch according to Claim 1, characterised in that a hub (29) is integrally formed on the friction disc (17), in that the hub (29) serves as a bearing for the gear wheel (3), in that the disc spring (16) is riveted to the hub (29), and in that a press fit is provided between the hub (29) and the transmission shaft (5).

3. Slip clutch according to Claim 1, characterised in that a projection (18) and at least one entraining lug (20) are constructed on the transmission shaft (5), in that an opening corresponding to the projection (18) and the entraining lug (20) is provided in the spring disc (16), and in that the projection (18) serves as a bearing journal for the gear wheel (3) and as a carrier for the friction disc (17).

4. Slip clutch according to Claim 1, characterised in that the diameter of the spring disc (16) is only a little smaller than the root diameter of the gear wheel (3), in that the gear wheel (3) is recessed for a deflection, directed towards the gear wheel (3), of the spring disc (16), and that the friction disc (17) rests annularly (25) on the opposite plane surface (26) of the gear wheel (3).

## Revendications

1. Accouplement à friction prévu dans le mécanisme d'horlogerie d'un enregistreur de route qui permet un alignement aussi bien des moyens d'entraînement pour les disques de diagramme servant de supports d'enregistrement que des aiguilles pour l'indication de l'heure et qui est réalisé entre un arbre de transmission (5) et une roue dentée motrice (3) dudit mécanisme d'horlogerie disposée sur ledit arbre de transmission,
caractérisé par le fait
qu'avec l'arbre de transmission (5) sont assemblées, de manière à être immobilisées dans le sens radial, une rondelle élastique bombée (16) et une rondelle de friction (17) et
que ladite roue dentée (3) est disposée entre ladite rondelle élastique bombée (16) et ladite rondelle de friction (17) de telle sorte que, après avoir surmonté un couple de friction réglé, elle puisse être tournée relativement à l'arbre de transmission (5).

2. Accouplement à friction selon la revendication 1,
caractérisé par le fait
que sur la rondelle de friction (17) est formé un moyeu (29),
que ledit moyeu (29) sert de palier à la roue dentée (3),
que la rondelle élastique bombée (16) est assemblée par rivetage avec le moyeu (29) et
qu'il est prévu un emmanchement par pression entre ledit moyeu (29) et ledit arbre de transmission (5).

3. Accouplement à friction selon la revendication 1,
caractérisé par le fait
que sur l'arbre de transmission (5) sont réalisés une saillie (18) et au moins un taquet d'entraînement (20),
que dans la rondelle élastique bombée (16) est prévue une ouverture correspondant à ladite saillie (18) et audit taquet d'entraînement (20) et
que ladite saillie (18) sert de tourillon à la roue dentée (3) et de support à la rondelle de friction (17).

4. Accouplement à friction selon la revendication 1,
caractérisé par le fait
que le diamètre de la rondelle élastique bombée (16) n'est que légèrement plus petit que le diamètre de pied de la roue dentée (3),
que ladite roue dentée (3) présente un évidement pour permettre une flexion de la rondelle élastique bombée (16) contre ladite roue dentée (3) et
que la rondelle de friction (17) appuie avec une surface annulaire (25) sur la surface plane opposée (26) de ladite roue dentée (3).
